(19) Europäisches Patentamt / European Patent Office / Office européen des brevets

(11) **EP 3 261 219 A1**

(12) **EUROPEAN PATENT APPLICATION**

(43) Date of publication:
**27.12.2017 Bulletin 2017/52**

(51) Int Cl.:
*H02K 1/24* *(2006.01)*      *H02K 19/10* *(2006.01)*
*H02K 1/16* *(2006.01)*      *H02K 3/12* *(2006.01)*

(21) Application number: **17175971.5**

(22) Date of filing: **14.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.06.2016 JP 2016121994**

(71) Applicant: **JTEKT CORPORATION
Osaka-shi,
Osaka 542-8502 (JP)**

(72) Inventors:
• **TONG, Mingyu**
  **Osaka-shi,, Osaka 542-8502 (JP)**
• **MATSUBARA, Ken**
  **Osaka-shi,, Osaka 542-8502 (JP)**
• **KARIATSUMARI, Yuji**
  **Osaka-shi,, Osaka 542-8502 (JP)**
• **INAYAMA, Hirohide**
  **Osaka-shi,, Osaka 542-8502 (JP)**
• **OKUMURA, Shigekazu**
  **Osaka-shi,, Osaka 542-8502 (JP)**
• **YAMAGUCHI, Ryosuke**
  **Osaka-shi,, Osaka 542-8502 (JP)**

(74) Representative: **Winter, Brandl, Fürniss, Hübner, Röss, Kaiser, Polte - Partnerschaft mbB
Patent- und Rechtsanwaltskanzlei
Alois-Steinecker-Strasse 22
85354 Freising (DE)**

(54) **SYNCHRONOUS RELUCTANCE MOTOR**

(57)     A synchronous reluctance motor 1 includes: an annular stator 2; and a rotor 3 disposed radially inside the stator 2. The stator 2 includes an annular stator core 4 having in its inner peripheral portion a plurality of slots 6U, 6V, 6W located at intervals in a circumferential direction of the stator 2, and slot coils 5U, 5V, 5W accommodated in the slots 6U, 6V, 6W. The slot coils 5U, 5V, 5W are formed by a wire having a quadrilateral section and are wound in the slots 6U, 6V, 6W by distributed winding.

FIG.2

EP 3 261 219 A1

**Description**

BACKGROUND OF THE INVENTION

1. Field of the Invention

The present invention relates to synchronous reluctance motors that are used for, e.g., electric power steering systems.

2. Description of the Related Art

Reluctance motors are known which rotate a rotor by using only reluctance torque generated by a change in electromagnetic energy with respect to the position. The reluctance motors include switched reluctance motors and synchronous reluctance motors. In the switched reluctance motors, a stator and a rotor have a magnetic saliency. In the synchronous reluctance motors, a stator has a structure similar to that of a brushless motor.
In the synchronous reluctance motors, only a rotor has a magnetic saliency out of the stator and the rotor. In the synchronous reluctance motors, there are a salient direction in which magnetic flux tends to flow (hereinafter referred to as the "d-axis direction") and a non-salient direction in which the magnetic flux is less likely to flow (hereinafter referred to as the "q-axis direction") due to the magnetic saliency of the rotor. Accordingly, reluctance torque is generated due to the difference between inductance in the d-axis direction and inductance in the q-axis direction, and the rotor is rotated by the reluctance torque. See, e.g., Japanese Patent Application Publication No. H11-289730 (JP H11-289730 A) for related art.
The synchronous reluctance motors do not use permanent magnets, and rotate the rotor by using only the reluctance torque. The synchronous reluctance motors are therefore disadvantageous in that their output torque is smaller than that of motors using permanent magnets. It is desired to increase the output torque of the synchronous reluctance motors as much as possible.

SUMMARY OF THE INVENTION

It is one object of the present invention to provide a synchronous reluctance motor that can generate larger output torque.
According to one aspect of the present invention, a synchronous reluctance motor includes: an annular stator; and a rotor disposed radially inside the stator. The stator includes an annular stator core having in its inner peripheral portion a plurality of slots located at an interval in a circumferential direction of the stator, and slot coils accommodated in the slots. The slot coils are formed by a wire having a quadrilateral section and are wound in the slots by distributed winding.
In the synchronous reluctance motor of the above aspect, the slot coils are formed by a wire having a quadrilateral section. In this case, clearance between the slot coils in the state where the slot coils are accommodated in the slots can be reduced as compared to the case where the slot coils are formed by a round wire having a circular section. A space factor of the slot coil, which is the proportion of the slot coil in the slot, can be thus increased.
In the synchronous reluctance motor of the above aspect, the slot coils are wound by distributed winding. Accordingly, a winding factor can be made closer to 1 as compared to the case where the slot coils are wound by concentrated winding. Since the space factor of the slot coil is increased and the winding factor is improved, output torque can be increased.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a sectional view showing the configuration of a synchronous reluctance motor according to an embodiment of the present invention;
FIG. 2 is an enlarged plan view of a portion surrounded by alternate long and short dash line II in FIG. 1;
FIG. 3 is an enlarged plan view of a portion near a slot opening portion;
FIG. 4 is a graph showing the simulation result of output torque for various circumferential widths of a coil accommodating portion of each slot;
FIG. 5 is a graph showing the simulation result of magnetic flux density for various average values of the circumferential width of a tooth body portion;
FIG. 6 is a graph showing the simulation result of the output torque for various radial widths of a yoke portion;
FIG. 7 is a graph showing the simulation result of the output torque for various ratios of the circumferential width of the slot opening portion to the circumferential width of the coil accommodating portion of each slot;
FIG. 8 is a graph showing the simulation result of torque ripple of the output torque in FIG. 7;
FIG. 9 is a graph showing the simulation result of the output torque for various angles between the coil accommodating portion and a slot connection portion;
FIG. 10 is a graph showing the simulation result of torque ripple of the output torque in FIG. 9; and
FIG. 11 is an enlarged plan view showing only a rotor of the synchronous reluctance motor in FIG. 1.

DETAILED DESCRIPTION OF EMBODIMENTS

An embodiment of the present invention will be described in detail below with reference to the accompanying drawings.

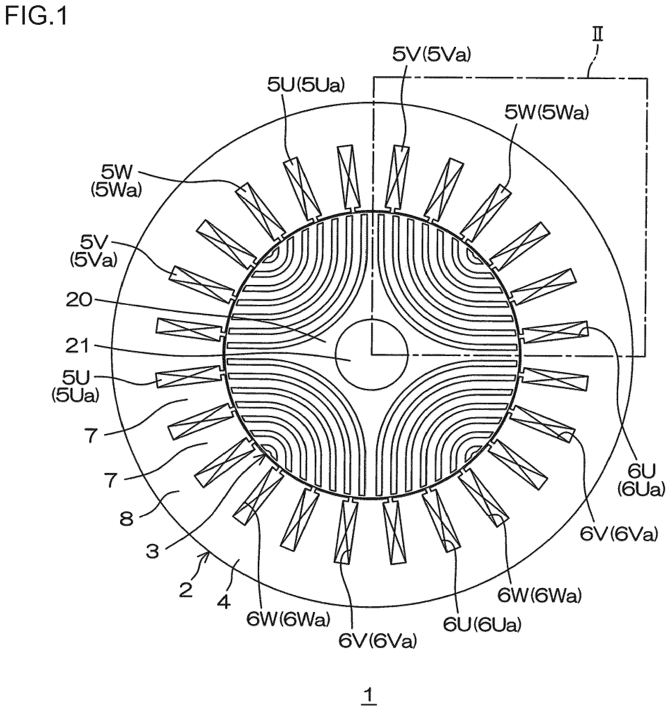

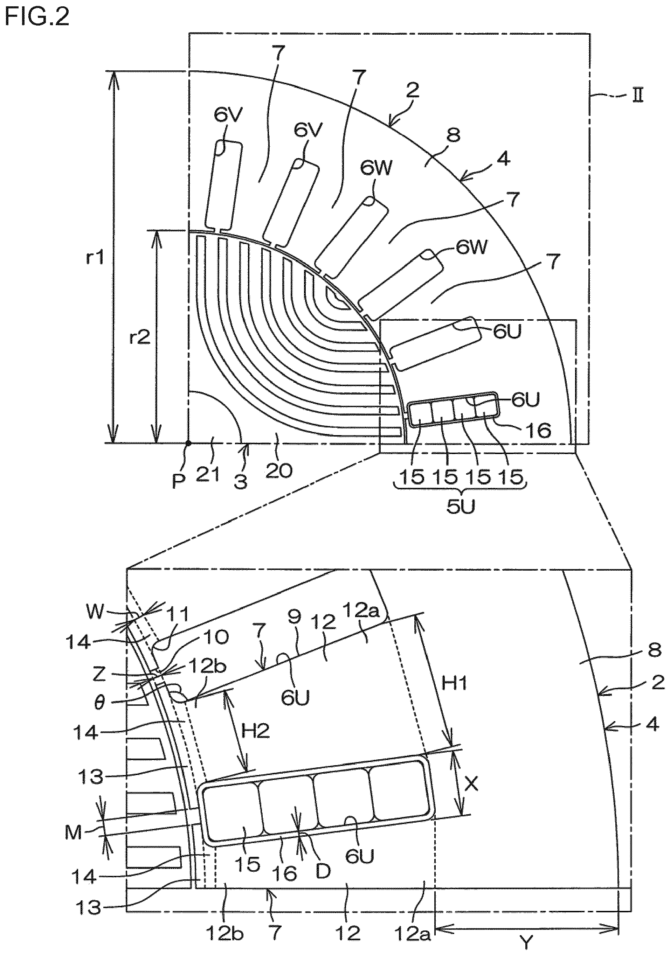

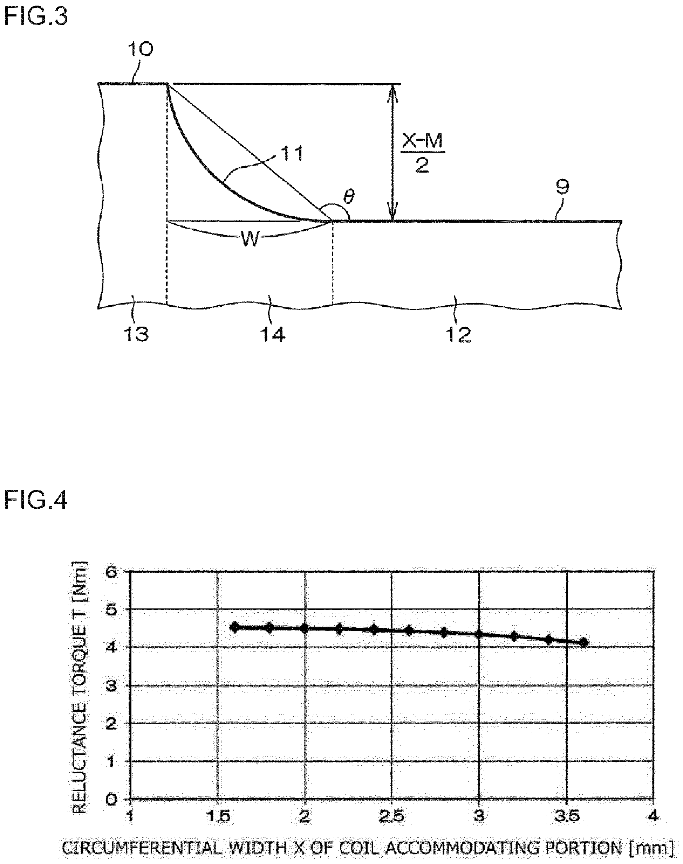

FIG. 1 is a sectional view showing the configuration of a synchronous reluctance motor 1 according to an embodiment of the present invention. FIG. 2 is an enlarged plan view of a portion surrounded by alternate long and short dash line II in FIG. 1. FIG. 3 is an enlarged plan view of a portion near a slot opening portion 10 described below. For convenience of description, a slot coil 5U is shown accommodated in only one slot 6U in FIG. 2. Slot coils 5U, 5V, 5W are not shown in FIG. 3. The slot coils 5U, 5V, 5W will be described later.

Referring to FIG. 1, the synchronous reluctance motor 1 (hereinafter simply referred to as the "motor 1") includes an annular stator 2 and a rotor 3. The stator 2 generates a rotating magnetic field. The rotor 3 is disposed radially inside the stator 2 and is rotated by the rotating magnetic field. Hereinafter, the circumferential direction of the stator 2 is simply referred to as the circumferential direction, and the radial direction of the stator 2 is simply referred to as the radial direction. The direction toward the inside in the radial direction of the stator 2 is simply referred to as toward the inside in the radial direction, and the direction toward the outside in the radial direction of the stator 2 is simply referred to as toward the outside in the radial direction. The axial direction of the rotor 3 is simply referred to as the axial direction, and an object as viewed in plan from the axial direction is simply referred to an object as viewed in plan.

The stator 2 includes an annular stator core 4 and slot coils 5U, 5V, 5W. In the present embodiment, the stator core 4 is formed by stacking a plurality of annular steel sheets. In the present embodiment, the stator core 4 has an inside diameter of about 50 mm and an outside diameter of about 90 mm.

The stator core 4 has a plurality of (in the present embodiment, 24) slots 6U, 6V, 6W, a plurality of (in the present embodiment, 24) tooth portions 7, and an annular yoke portion 8. The plurality of slots 6U, 6V, 6W are located at regular intervals in the circumferential direction. Each of the plurality of tooth portions 7 is a portion located between two of the slots 6U, 6V, 6W which are adjacent to each other in the circumferential direction. The yoke portion 8 is a portion located radially outside the slots 6U, 6V, 6W and the tooth portions 7.

Referring to FIG. 2, each slot 6U, 6V, 6W has a quadrilateral shape extending in the radial direction as viewed in plan. All of the slots 6U, 6V, 6W have the same shape and the same area. Specifically, each slot 6U, 6V, 6W includes a coil accommodating portion 9, a slot opening portion 10, and a slot connection portion 11. The coil accommodating portion 9 is a portion in which the slot coil 5U, 5V, 5W is accommodated. The slot opening portion 10 is located radially inside the coil accommodating portion 9. The slot connection portion 11 is located between the coil accommodating portion 9 and the slot opening portion 10 and connects the coil accommodating portion 9 and the slot opening portion 10.

Each coil accommodating portion 9 has a quadrilateral shape extending in the radial direction as viewed in plan (in the present embodiment, a rectangular shape as viewed in plan). The circumferential width of each coil accommodating portion 9 is substantially uniform along the radial direction. The radial width of each coil accommodating portion 9 is substantially uniform along the circumferential direction.

Each slot opening portion 10 has a quadrilateral shape extending in the circumferential direction as viewed in plan (in the present embodiment, a rectangular shape as viewed in plan). The circumferential width of each slot opening portion 10 is smaller than that of each coil accommodating portion 9. Each slot opening portion 10 communicates, at its radially outer end, with the coil accommodating portion 9 in the middle part in the circumferential direction of the coil accommodating portion 9 via the slot connection portion 11.

Each slot connection portion 11 connects the radially inner end of the coil accommodating portion 9 and the radially outer end of the slot opening portion 10. In the present embodiment, each slot connection portion 11 is formed so that its circumferential width gradually increases toward the coil accommodating portion 9 from the slot opening portion 10. A predetermined angle is thus formed between the coil accommodating portion 9 and the slot connection portion 11.

Referring to FIG. 2, each tooth portion 7 includes a tooth body portion 12, an inner end 13, and a tooth connection portion 14. The tooth body portion 12 of each tooth portion 7 is a portion sandwiched between the coil accommodating portions 9 of two of the slots 6U, 6V, 6W which are adjacent to each other in the circumferential direction. The tooth body portion 12 has an outer end 12a and an inner end 12b. The outer end 12a is connected to the yoke portion 8 located radially outside the tooth body portion 12, and the inner end 12b is connected to the inner end 13 located radially inside the tooth body portion 12. In the present embodiment, the circumferential width of the tooth body portion 12 gradually increases toward the outside in the radial direction from the inside in the radial direction. The circumferential width of the outer end 12a of the tooth body portion 12 is thus larger than that of the inner end 12b of the tooth body portion 12.

The inner end 13 of each tooth portion 7 is a portion sandwiched between the slot opening portions 10 of two of the slots 6U, 6V, 6W which are adjacent to each other in the circumferential direction. The circumferential width of the inner end 13 is larger than that of the inner end 12b of the tooth body portion 12. The tooth connection portion 14 of each tooth portion 7 is a portion sandwiched between the slot connection portions 11 of two of the slots 6U, 6V, 6W which are adjacent to each other in the circumferential direction. The tooth connection portion 14 of each tooth portion 7 connects the tooth body portion 12 and the inner end 13.

Referring to FIGS. 1 and 2, the stator core 4 has three independent slot coils 5U, 5V, 5W wound therein. In the present embodiment, the three independent slot coils 5U, 5V, 5W include a U-phase slot coil 5U, a V-phase slot coil 5V, and a W-phase slot coil 5W. In the present embodiment, each slot coil 5U, 5V, 5W is formed by a wire containing copper and having a quadrilateral section, more specifically, a rectangular wire. Each slot coil 5U, 5V, 5W is wound in the slots 6U, 6V, 6W of a corresponding phase by distributed winding.

More specifically, the plurality of slots 6U, 6V, 6W include a U-phase slot 6U in which the U-phase slot coil 5U is wound by distributed winding, a V-phase slot 6V in which the V-phase slot coil 5V is wound by distributed winding, and a W-phase slot 6W in which the W-phase slot coil 5W is wound by distributed winding. Referring to FIG. 1, each slot 6U, 6V, 6W includes a pair of slots 6Ua, 6Va, 6Wa formed at an interval in the circumferential direction with more than one (in the present embodiment, five) of the tooth portions 7 being interposed therebetween in the circumferential direction. In the present embodiment, four pairs of slots 6Ua, 6Va, 6Wa are arranged at regular intervals in the circumferential direction. Each slot coil 5U, 5V, 5W includes four winding portions 5Ua, 5Va, 5Wa wound in each pair of slots 6U, 6V, 6W of a corresponding phase.

The configuration in one slot 6U, 6V, 6W will be described with reference to FIG. 2. Each slot coil 5U, 5V, 5W includes a plurality of (in the present embodiment, four) conductor portions 15 disposed so as to extend in the axial direction and arranged in line in the radial direction. The four conductor portions 15 are wrapped together in insulating paper 16 and are disposed in the slot 6U, 6V, 6W with the insulating paper 16 interposed therebetween. The number of conductor portions 15 arranged in line is preferably an even number, and is four in the present embodiment. The number of conductor portions 15 may be other than four, such as two, six, or eight.

Interterminal resistance R of each slot coil 5U, 5V, 5W is set based on the following Expressions (1) to (3).

$$R = \rho \cdot (L/Se) \quad \dots (1)$$

$$Se = 1/n \cdot \{(r1 - r2) - (Y - Z) - W - 2 \cdot D\} \cdot (X - 2 \cdot D) \quad \dots (2)$$

$$W = (0.5 \cdot X - 0.5 \cdot M)/\tan(180° - \theta) \quad \dots (3)$$

In Expression (1), $\rho$ represents the resistivity of each slot coil 5U, 5V, 5W, L represents the length of each slot coil 5U, 5V, 5W, and Se represents the sectional area of each conductor portion 15.

Referring to FIGS. 2 and 3, in Expressions (2) and (3), n represents the number of conductor portions 15 that are accommodated in the coil accommodating portion 9 (in the present embodiment, n = 4), r1 represents the distance between the rotation center point P of the rotor 3 and the outer edge of the stator 2, and r2 represents the distance between the rotation center point P of the rotor 3 and the inner edge of the stator 2. In the present embodiment, r1 is 1/2 of the outside diameter of the stator core 4, and r2 is 1/2 of the inside diameter of the stator core 4. Y represents the radial width of the yoke portion 8, and Z represents the radial width of the slot opening portion 10. X represents the circumferential width of the coil accommodating portion 9, M represents the circumferential width of the slot opening portion 10, and $\theta$ represents the angle between the coil accommodating portion 9 and the slot connection portion 11 (hereinafter simply referred to as the opening angle). D represents the thickness of the insulating paper 16, and W represents the radial width of the slot connection portion 11.

In the present embodiment, each slot coil 5U, 5V, 5W formed by a wire having a quadrilateral section (rectangular wire) is wound in the slots 6U, 6V, 6W of a corresponding phase by distributed winding. In the case of the slot coils 5U, 5V, 5W formed by a wire having a quadrilateral section (rectangular wire), clearance between the slot coil 5U, 5V, 5W and the slot 6U, 6V, 6W can be reduced as compared to the case where the slot coils 5U, 5V, 5W formed by a round wire having a circular section are wound with the same number of turns in the slots 6U, 6V, 6W. Moreover, since the slot coils 5U, 5V, 5W have a larger sectional area, winding resistance of the slots 6U, 6V, 6W can be reduced.

The space factor of each slot coil 5U, 5V, 5W, which is the proportion of the slot coil 5U, 5V, 5W in each slot 6U, 6V, 6W, can be increased while reducing the interterminal resistance R of each slot coil 5U, 5V, 5W. In particular, setting the interterminal resistance R of each slot coil 5U, 5V, 5W based on Expressions (1) to (3) can effectively increase the space factor of each slot coil 5U, 5V, 5W while satisfactorily reducing the interterminal resistance R of each slot coil 5U, 5V, 5W.

Winding the slot coils 5U, 5V, 5W by distributed winding can make the winding factor closer to 1 as compared to the case of winding the slot coils 5U, 5V, 5W by concentrated winding. Since the interterminal resistance R of each slot coil 5U, 5V, 5W is reduced, the space factor thereof is increased, and the winding factor is improved, reluctance torque T, which is output torque of the motor 1, can be increased.

The relationship among the average value of the circumferential width of the tooth body portion 12, the circumferential width X of the coil accommodating portion 9, and the radial width Y of the yoke portion 8 will be described. The average value H of the circumferential width of the tooth body portion 12 is given by the following Expression (4).

$$H = (H1 + H2)/2 \qquad \ldots (4)$$

In Expression (4), H1 represents the circumferential width of the outer end 12a of the tooth body portion 12, and H2 represents the circumferential width of the inner end 12b of the tooth body portion 12.

It is preferable to set the average value H of the circumferential width of the tooth body portion 12 to a value equal to or larger than the circumferential width X of the coil accommodating portion 9 ($X \leq H$). With this configuration, the volume of each tooth portion 7 can be made larger than the capacity of each slot 6U, 6V, 6W. Since the volume of the stator core 4 is increased, magnetic resistance of the stator core 4 can be reduced, and magnetic utilization can thus be improved.

The radial width Y of the yoke portion 8 may be set to a value equal to or larger than the average value H of the circumferential width of the tooth body portion 12 ($H \leq Y$). With this configuration, the volume of the stator core 4 can be effectively increased. Accordingly, the average value H of the circumferential width of the tooth body portion 12 may be set to a value equal to or larger than the circumferential width X of the coil accommodating portion 9 and equal to or smaller than the radial width Y of the yoke portion 8 ($X \leq H \leq Y$).

Specific values of the circumferential width X of the coil accommodating portion 9, the average value H of the circumferential width of the tooth body portion 12, the radial width Y of the yoke portion 8, the radial width Z of the slot opening portion 10, the circumferential width M of the slot opening portion 10, and the opening angle $\theta$ will be described with reference to FIGS. 4 to 9.

FIG. 4 is a graph showing the simulation result of the reluctance torque T for various circumferential widths X of the coil accommodating portion 9.

In this simulation, the average value H of the circumferential width of the tooth body portion 12 was 4.4 mm, the radial width Y of the yoke portion 8 was 7.2 mm, the radial width Z of the slot opening portion 10 was 0.5 mm, the circumferential width M of the slot opening portion 10 was 0.5 mm, and the opening angle $\theta$ was 100°.

Referring to FIG. 4, the reluctance torque T is 4 N·m or more when the circumferential width X of the coil accommodating portion 9 is 1.6 mm or more and 3.6 mm or less. Referring to FIG. 4, the reluctance torque T decreases as the circumferential width X of the coil accommodating portion 9 increases. This is because, as the circumferential width X of the coil accommodating portion 9 increases, the average value H of the circumferential width of the tooth body portion 12 decreases and the magnetic resistance of the stator core 4 increases accordingly. The result of FIG. 4 shows that the reluctance torque T of 4 N·m or more can be satisfactorily achieved at least by setting the circumferential width X of the coil accommodating portion 9 to 1.6 mm or more and 3.6 mm or less.

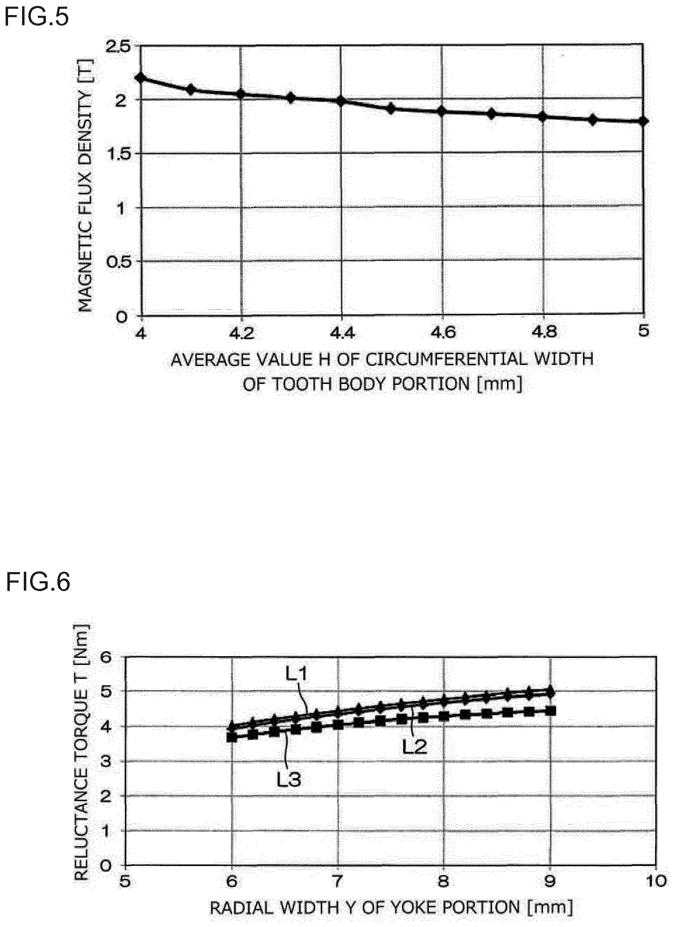

FIG. 5 is a graph showing the simulation result of magnetic flux density for various average values H of the circumferential width of the tooth body portion 12. The magnetic flux density herein means the density of magnetic flux passing through a single tooth portion 7.

In this simulation, the circumferential width X of the coil accommodating portion 9 was 2.6 mm, the radial width Y of the yoke portion 8 was 7.2 mm, the radial width Z of the slot opening portion 10 was 0.5 mm, the circumferential width M of the slot opening portion 10 was 0.5 mm, and the opening angle $\theta$ was 100°.

Referring to FIG. 5, the magnetic flux density is 1.5 T or more when the average value H of the circumferential width of the tooth body portion 12 is 4 mm or more and 5 mm or less. Referring to FIG. 5, the magnetic flux density increases as the average value H of the circumferential width of the tooth body portion 12 decreases. In particular, the magnetic flux density is as high as 2H or more when the average value H of the circumferential width of the tooth body portion 12 is less than 4.4.

This is because, as the average value H of the circumferential width of the tooth body portion 12 decreases and the circumferential width X of the coil accommodating portion 9 increases, the magnetic resistance increases and the magnetic utilization decreases accordingly, which causes magnetic saturation. This result shows that, in order to restrain magnetic saturation, it is preferable to set the average value H of the circumferential width of the tooth body portion 12 to 4.4 mm or more and 5 mm or less.

The results of FIGS. 4 and 5 show that magnetic saturation can be restrained and satisfactory reluctance torque T can be achieved by setting the ratio X/H of the circumferential width X (1.6 mm or more and 3.6 mm or less) of the coil accommodating portion 9 to the average value H (4.4 mm or more and 5 mm or less) of the circumferential width of the tooth body portion 12 to 0.32 or more and 0.82 or less.

FIG. 6 is a graph showing the simulation result of the reluctance torque T for various radial widths Y of the yoke portion 8.

In this simulation, the circumferential width X of the coil accommodating portion 9 was 1.6 mm, 2.6 mm, and 3.6 mm, the radial width Z of the slot opening portion 10 was 0.5 mm, the circumferential width M of the slot opening portion 10 was 0.5 mm, and the opening angle θ was 100°.

FIG. 6 shows first to third lines L1, L2, L3. The first line L1 shows the relationship between the radial width Y of the yoke portion 8 and the reluctance torque T when the circumferential width X of the coil accommodating portion 9 is 1.6 mm. The second line L2 shows the relationship between the radial width Y of the yoke portion 8 and the reluctance torque T when the circumferential width X of the coil accommodating portion 9 is 2.6 mm. The third line L3 shows the relationship between the radial width Y of the yoke portion 8 and the reluctance torque T when the circumferential width X of the coil accommodating portion 9 is 3.6 mm.

Referring to FIG. 6, when the radial width Y of the yoke portion 8 is 6 mm or more and 9 mm or less, the reluctance torque T is 3.5 N·m or more for all of the above three values of the circumferential width X of the coil accommodating portion 9. In particular, when the radial width Y of the yoke portion 8 is 6.6 mm or more and 9 mm or less, the reluctance torque T is 4 N·m or more.

Referring to FIG. 6, the reluctance torque T increases as the radial width Y of the yoke portion 8 increases. This is because, as the radial width Y of the yoke portion 8 increases, the magnetic resistance of the stator core 4 decreases and thus the magnetic utilization improves accordingly. Referring to FIG. 6, the reluctance torque T decreases as the circumferential width X of the coil accommodating portion 9 increases. This is because, as the circumferential width X of the coil accommodating portion 9 increases, the average value H of the circumferential width of the tooth body portion 12 decreases and the magnetic resistance of the stator core 4 increases accordingly, as described above.

The results of FIGS. 4 and 6 show that magnetic saturation can be satisfactorily restrained and satisfactory reluctance torque T can be achieved by setting the ratio Y/H of the radial width Y (6 mm or more and 9 mm or less) of the yoke portion 8 to the average value H (4.4 mm or more and 5 mm or less) of the circumferential width of the tooth body portion 12 to 1.2 or more and 2 or less. The average value H of the circumferential width of the tooth body portion 12 may be set to a value equal to or smaller than the radial width Y of the yoke portion 8. Accordingly, the ratio Y/H of the radial width Y (6 mm or more and 9 mm or less) of the yoke portion 8 to the average value H (4.4 mm or more and 5 mm or less) of the circumferential width of the tooth body portion 12 may be 1 or more and 2 or less.

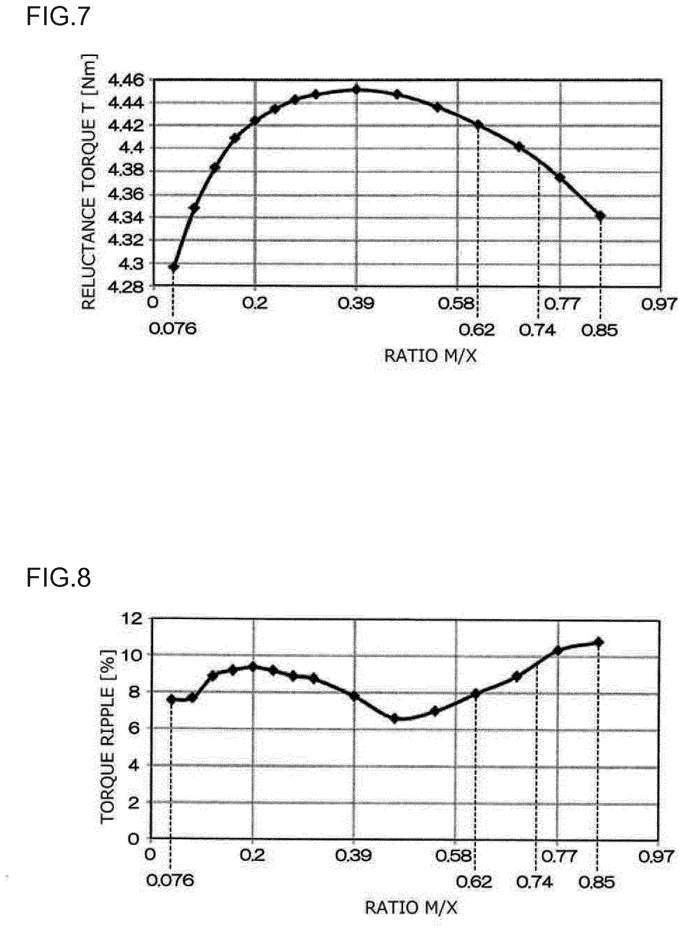

FIG. 7 is a graph showing the simulation result of the reluctance torque T for various ratios M/X of the circumferential width M of the slot opening portion 10 to the circumferential width X of the coil accommodating portion 9 (0 < M/X < 1).

In this simulation, the circumferential width X of the coil accommodating portion 9 was 2.6 mm, the average value H of the circumferential width of the tooth body portion 12 was 4.4 mm, the radial width Y of the yoke portion 8 was 7.2 mm, the radial width Z of the slot opening portion 10 was 0.5 mm, and the opening angle θ was 100°.

The ratio M/X of the circumferential width M of the slot opening portion 10 to the circumferential width X of the coil accommodating portion 9 was varied in the range of 0.076 to 0.85, both inclusive. More specifically, the circumferential width X of the coil accommodating portion 9 was 2.6 mm, and the circumferential width M of the slot opening portion 10 was varied in the range of 0.2 mm to 2.2 mm, both inclusive.

Referring to FIG. 7, the reluctance torque T is 4.28 N·m or more when the ratio M/X of the circumferential width M of the slot opening portion 10 to the circumferential width X of the coil accommodating portion 9 is 0.076 or more and 0.85 or less (that is, when the circumferential width M of the slot opening portion 10 is 0.2 mm or more and 2.2 mm or less). In particular, the reluctance torque T is 4.38 N·m or more when the ratio M/X of the circumferential width M of the slot opening portion 10 to the circumferential width X of the coil accommodating portion 9 is 0.2 or more and 0.74 or less (that is, when the circumferential width M of the slot opening portion 10 is 0.5 mm or more and 1.9 mm or less).

FIG. 8 is a graph showing the simulation result of torque ripple of the reluctance torque T in FIG. 7.

Referring to FIG. 8, the torque ripple is 10% or less when the ratio M/X of the circumferential width M of the slot opening portion 10 to the circumferential width X of the coil accommodating portion 9 is 0.076 or more and 0.74 or less (that is, when the circumferential width M of the slot opening portion 10 is 0.2 mm or more and 1.9 mm or less). In particular, the torque ripple is 8% or less when the ratio M/X of the circumferential width M of the slot opening portion 10 to the circumferential width X of the coil accommodating portion 9 is 0.39 or more and 0.62 or less (that is, when the circumferential width M of the slot opening portion 10 is 1 mm or more and 1.6 mm or less).

FIG. 7 shows that the reluctance torque T decreases as the ratio M/X of the circumferential width M of the slot opening portion 10 to the circumferential width X of the coil accommodating portion 9 becomes closer to 0 or 1, and that the reluctance torque T has a maximum value between when the ratio M/X is 0 and when the ratio M/X is 1.

When the ratio M/X of the circumferential width M of the slot opening portion 10 to the circumferential width X of the coil accommodating portion 9 is approximately 0, the slot opening portion 10 is substantially closed by the inner end 13 of the tooth portion 7. In this case, adjacent ones of the tooth portions 7 are substantially magnetically connected by the inner ends 13, and magnetism is not appropriately utilized. This results in reduced magnetic utilization and reduced reluctance torque T. When the ratio M/X of the circumferential width M of the slot opening portion 10 to the circumferential width X of the coil accommodating portion 9 is approximately 1, there is no inner end 13 radially inside the coil accommodating portion 9. In this case, the magnetic resistance of the tooth portion 7 increases, which results in reduced magnetic utilization and reduced reluctance torque T.

Accordingly, setting the ratio M/X of the circumferential width M of the slot opening portion 10 to the circumferential width X of the coil accommodating portion 9 to an appropriate value under the condition of 0 < M/X < 1 improves the magnetic utilization, whereby satisfactory reluctance torque T can be achieved. Referring to FIG. 8, setting the ratio M/X of the circumferential width M of the slot opening portion 10 to the circumferential width X of the coil accommodating portion 9 to an appropriate value can also satisfactorily reduce the torque ripple as the magnetic utilization is improved.

The simulation results of FIGS. 7 and 8 show that it is preferable to set the ratio M/X of the circumferential width M of the slot opening portion 10 to the circumferential width X of the coil accommodating portion 9 to 0.2 or more and 0.74 or less (that is, the circumferential width M of the slot opening portion 10 is 0.5 mm or more and 1.9 mm or less). With the ratio M/X being in this range, the reluctance torque T of 4.38 N·m or more and the torque ripple of 10% or less can be achieved.

The simulation results of FIGS. 7 and 8 also show that it is more preferable to set the ratio M/X of the circumferential width M of the slot opening portion 10 to the circumferential width X of the coil accommodating portion 9 to 0.39 or more and 0.62 or less (that is, the circumferential width M of the slot opening portion 10 is 1 mm or more and 1.6 mm or less). With the ratio M/X being in this range, the reluctance torque T of 4.4 N·m or more and the torque ripple of 8% or less can be achieved.

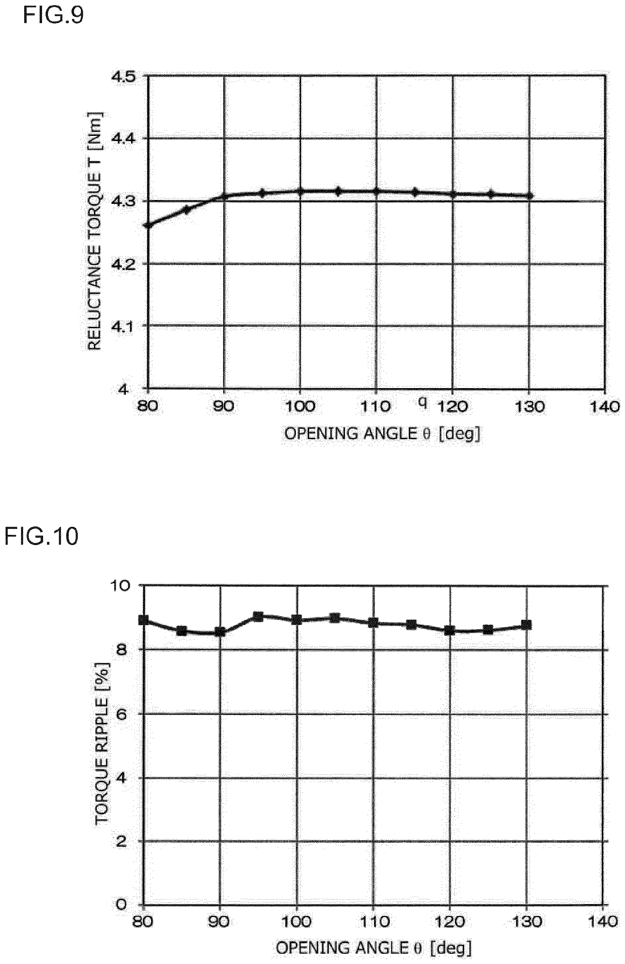

FIG. 9 is a graph showing the simulation result of the reluctance torque T for various opening angles θ. FIG. 10 is a graph showing the simulation result of torque ripple of the reluctance torque T in FIG. 9.

In this simulation, the circumferential width X of the coil accommodating portion 9 was 2.6 mm, the average value H of the circumferential width of the tooth body portion 12 was 4.4 mm, the radial width Y of the yoke portion 8 was 7.2 mm, the radial width Z of the slot opening portion 10 was 0.5 mm, and the circumferential width M of the slot opening portion 10 was 0.5 mm.

Referring to FIG. 9, when the opening angle θ is 80° or more and 130° or less, the reluctance torque T is 4.2 N·m or more. Referring to FIG. 9, when the opening angle θ becomes less than 90°, the reluctance torque T decreases sharply. The reason for this is as follows. When the opening angle θ is set to less than 90°, the tip of the inner end 13 of the tooth portion 7 projects toward the coil accommodating portion 9 (that is, toward the outside in the radial direction), and the tip of the inner end 13 of the tooth portion 7 and the tooth body portion 12 face each other in the circumferential direction. This causes leakage of magnetic flux between the tip of the inner end 13 of the tooth portion 7 and the tooth body portion 12, which reduces the magnetic utilization.

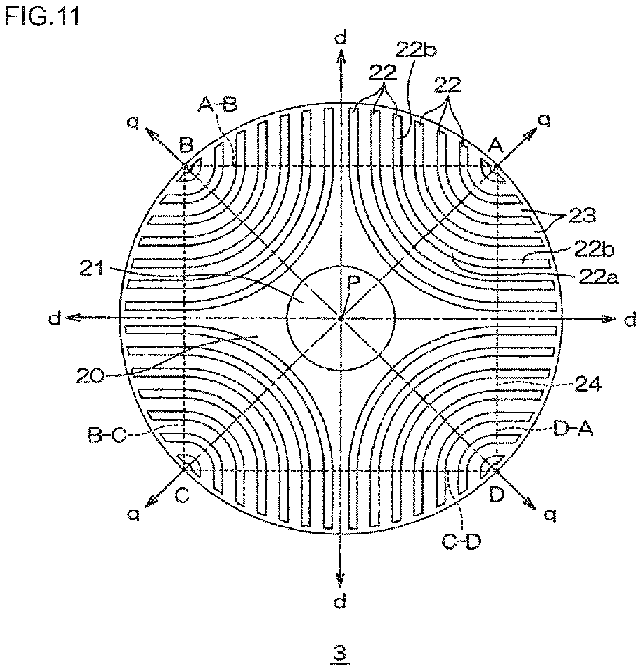

Referring to FIG. 10, the torque ripple does not vary significantly with a change in opening angle θ. The torque ripple is 10% or less for every value of the opening angle θ. The results of FIGS. 9 and 10 show that it is preferable to set the opening angle θ to 90° or more and 130° or less. Referring back to FIG. 1, the rotor 3 has four poles (two pairs of poles) in the present embodiment. The rotor 3 includes a rotor core 20 and a rotation shaft 21 extending through the central part of the rotor core 20 and fixed to the rotor core 20. The rotor core 20 is formed by stacking a plurality of circular electromagnetic steel sheets each having a hole in its central part. In the present embodiment, the outside diameter of the rotor core 20 is about 49.6 mm. The configuration of the rotor 3 will be specifically described with reference to FIG. 11. FIG. 11 is an enlarged plan view showing only the rotor 3 of the synchronous reluctance motor 1 in FIG. 1.

Referring to FIG. 11, the rotor core 20 has flux barrier groups formed at intervals in the circumferential direction. The number of flux barrier groups corresponds to the number of poles. Each of the flux barrier groups consists of a plurality of arc-shaped flux barriers (in this example, slits (air layers)) 22 that are arranged in a plurality of layers from the outer periphery of the rotor core 20 toward the rotation shaft 21 and that are convex toward the rotation shaft 21. In this example, the rotor core 20 has four flux barrier groups formed at intervals in the circumferential direction. The flux barriers 22 of each flux barrier group are arranged in seven layers. That is, each flux barrier group consists of seven flux barriers 22 having different lengths. The flux barriers 22 need not necessarily be slits. The flux barriers 22 may be made of a nonmagnetic material such as resin.

In the following description, a rib 23 refers to a region of the rotor core 20 which is sandwiched between adjacent two of the flux barriers 22 of the same flux barrier group as viewed in plan. A q-axis is an axis extending through the midpoints in the circumferential direction of the flux barriers 22 of each flux barrier group and extending in the radial direction of the rotor core 20. A d-axis is an axis extending between adjacent two of the flux barrier groups and extending in the radial direction of the rotor core 20.

The flux barriers 22 impede the flow of magnetic flux. Accordingly, the magnetic flux from the stator core 4 is less likely to flow in the direction from one of adjacent two of the q-axes to the other. However, due to the ribs 23 each located between the flux barriers 22, the magnetic flux from the stator core 4 tends to flow in the direction from one of adjacent two of the d-axes to the other.

If a rotating magnetic field is applied from the stator 2 to the rotor 3, reluctance torque T is generated from the motor 1. The reluctance torque T is given by the following Expression (5).

$$T = pn \cdot (Ld - Lq) \cdot Id \cdot Iq \qquad \dots (5)$$

In Expression (5), pn represents the number of pole pairs, Ld represents d-axis inductance, Lq represents q-axis inductance, Id represents a d-axis current, and Iq represents a q-axis current.

The reluctance torque T therefore increases as the difference between the d-axis inductance Ld and the q-axis inductance Lq, namely (Ld - Lq), increases. In the present embodiment, in order to increase the difference (Ld - Lq), the flux barriers 22 are formed to increase the magnetic resistance of a magnetic path in the q-axis direction and to reduce the magnetic resistance of a magnetic path in the d-axis direction.

In the present embodiment, in order to increase the reluctance torque T while reducing torque ripple, the flux barriers 22 are designed to have an appropriate shape as viewed in plan. The shape of the flux barriers 22 as viewed in plan will be described in detail.

Referring to FIG. 11, A, B, C, and D refer to the midpoints in the circumferential direction of the flux barrier groups which are located on the outer peripheral edge of the rotor 3. A polygonal region (in this example, a quadrilateral region) 24 is a region of the rotor 3 which is surrounded by a polygon (in this example, a quadrangle) having vertices A, B, C, D as viewed in plan. The side or the line segment connecting the vertices A, B of the polygonal region 24 is sometimes referred to as A-B, the side or the line segment connecting the vertices B, C of the polygonal region 24 is sometimes referred to as B-C, the side or the line segment connecting the vertices C, D of the polygonal region 24 is sometimes referred to as C-D, and the side or the line segment connecting the vertices D, A of the polygonal region 24 is sometimes referred to as D-A.

The plurality of flux barriers 22 of each flux barrier group are formed by arc-shaped portions 22a located inside the polygonal region 24 and linear portions 22b located outside the polygonal region 24 and extending from both ends of each arc-shaped portion 22a, as viewed in plan. The center of the arcs of the plurality of arc-shaped portions 22a of each flux barrier group is located at the midpoint A, B, C, D in the circumferential direction of that flux barrier group which is located on the outer peripheral edge of the rotor 3. The linear portion 22b extending from each end of the arc-shaped portion 22a extends in the direction perpendicular to one of the four sides of the polygonal region 24 which is located close to that end of the arc-shaped portion 22a, as viewed in plan. In other words, the linear portion 22b extending from each end of the arc-shaped portion 22a extends in the direction tangential to the arc-shaped portion 22a from that end of the arc-shaped portion 22a.

For example, the plurality of flux barriers 22 of one flux barrier group are formed by a plurality of arc-shaped portions 22a whose center is located at the point A, a plurality of linear portions 22b extending perpendicularly to the side A-B from one end on the side A-B of the arc-shaped portions 22a, and a plurality of linear portions 22b extending perpendicularly to the side D-A from one end on the side D-A of the arc-shaped portions 22a, as viewed in plan.

The reason why the plurality of flux barriers 22 of each flux barrier group are designed to have the shape described above as viewed in plan will be described with respect to one flux barrier group for example. In the case where a planar circuit with an area S is placed in a magnetic field with magnetic flux density B [wb], magnetic flux Φ passing through the planar circuit with the area S is commonly given by the following Expression (6).

$$\Phi = B \cdot S \cdot \sin\phi \qquad \dots (6)$$

In Expression (6), φ represents an angle between the plane of the planar circuit and the direction of the magnetic flux.

Expression (6) shows that the magnetic flux Φ is maximum when the angle φ between the plane of the planar circuit and the direction of the magnetic flux is 90 degrees.

In the case where the plurality of flux barriers 22 of each flux barrier group are designed to have the shape described above as viewed in plan, the magnetic flux flowing in the d-axis direction passes through the ribs 23 perpendicularly to the sections of the ribs 23 taken along the line segment D-A, and the sectional area of each rib 23 through which the magnetic flux passes, taken along the line segment D-A, is maximum. The magnetic utilization is thus improved, whereby the reluctance torque T can be increased.

The arc-shaped portions 22a can be formed to a position closer to the center of the rotor 3 as compared to the case where the center of the arcs of the flux barriers 22 is located at a position outside the outer peripheral edge of the rotor 3 on the q-axis. The width of the ribs 23 can thus be increased, whereby the magnetic resistance of the magnetic path in the d-axis direction can be reduced. The reluctance torque T can thus be increased.

Although the embodiment of the present invention is described above, the present invention can be carried out in other forms.

For example, in the above embodiment, the number of slots 6U, 6V, 6W and the number of tooth portions 7 are 24. However, the number of slots 6U, 6V, 6W and the number of tooth portions 7 may be more than 24. For example, the number of slots 6U, 6V, 6W and the number of tooth portions 7 may be 36, 48, 96, etc.

In the above embodiment, the rotor 3 has four poles (two pairs of poles). However, the number of poles of the rotor 3 may be other than four. For example, the rotor 3 may have six poles (three pairs of poles), eight poles (four pairs of poles), etc.

In the above embodiment, the flux barriers 22 are arranged in seven layers. However the number of layers of the flux barriers 22 may be other than seven. For example, the flux barriers 22 may be arranged in five layers, six layers, eight layers, nine layers, etc.

In the above embodiment, the slot coils 5U, 5V, 5W may be formed by segment conductors. That is, the slot coil 5U, 5V, 5W of each phase may be configured so that U-shaped segment conductors having a pair of tip ends are accommodated in the four pairs of slots 6U, 6V, 6W of a corresponding phase and are connected together with the tip ends of each segment conductor being bonded together in a predetermined manner. Forming the slot coils 5U, 5V, 5W by the segment conductors facilitates attachment of the slot coils 5U, 5V, 5W to the stator core 4.

The above embodiment is described with respect to the example in which the radial width Z of each slot opening portion 10 is 0.5 mm. However, the radial width Z of each slot opening portion 10 may be, e.g., 0.3 mm or more and 1.0 mm or less. In this configuration, the radial width of the inner end 13 of each tooth portion 7 is also 0.3 mm or more and 1.0 mm or less, whereby the magnetic resistance can be reduced in the inner end 13. The magnetic utilization can thus be satisfactorily improved.

For example, the present invention can be applied to synchronous motors that are used in electric power steering systems. However, the present invention is also applicable to synchronous motors that are used in systems other than electric power steering systems.

Features based on the specification and the drawings will be described below.

A synchronous reluctance motor (1) includes: an annular stator (2); and a rotor (3) disposed radially inside the stator. The stator includes an annular stator core (4) having in its inner peripheral portion a plurality of slots (6U, 6V, 6W) located at an interval in a circumferential direction of the stator, and slot coils (5U, 5V, 5W) accommodated in the slots. Each of the slots is formed by a coil accommodating portion (12) extending in a radial direction of the stator and accommodating the slot coil, and a slot opening portion (13) communicating with the coil accommodating portion at a radially inner end of the coil accommodating portion. A ratio (M/X) of a circumferential width (M) of the slot opening portion to a circumferential width (X) of the coil accommodating portion is set to 0.076 or more and 0.85 or less.

In this configuration, the ratio of the circumferential width of the slot opening portion to the circumferential width of the coil accommodating portion is set to 0.076 or more and 0.85 or less. This can satisfactorily improve magnetic utilization, whereby output torque can be increased. Since the magnetic utilization is improved, torque ripple can be reduced.

In the above synchronous reluctance motor, each of the slots may include a slot connection portion (11) located between the coil accommodating portion and the slot opening portion and connecting the coil accommodating portion and the slot opening portion. An angle (θ) between the coil accommodating portion and the slot connection portion may be set to 90° or more and 130° or less.

In the above synchronous reluctance motor, the plurality of slots may be located at a regular interval in the circumferential direction. The slot opening portion may communicate with the coil accommodating portion in a middle part in the circumferential direction of the coil accommodating portion.

In the above synchronous reluctance motor, the stator core may include a tooth portion (7) that is a portion between the slots adjacent to each other in the circumferential direction. The tooth portion may have a circumferential width that gradually decreases toward the inside in the radial direction. An average value (H) of the circumferential width of the tooth portion may be set to a value equal to or larger than the circumferential width of the coil accommodating portion.

In the above synchronous reluctance motor, the ratio of the circumferential width of the slot opening portion to the circumferential width of the coil accommodating portion may be set to 0.2 or more and 0.74 or less.

In the above synchronous reluctance motor, output torque may be 4 N·m or more and torque ripple may be 10% or less.

**Claims**

1. A synchronous reluctance motor, comprising:

   an annular stator; and
   a rotor disposed radially inside the stator; wherein
   the stator includes an annular stator core having in its inner peripheral portion a plurality of slots located at an interval in a circumferential direction of the stator, and slot coils accommodated in the slots, and
   the slot coils are formed by a wire having a quadrilateral section and are wound in the slots by distributed winding.

2. The synchronous reluctance motor according to claim 1, wherein
   the plurality of slots are located at a regular interval in the circumferential direction,
   the stator core includes a tooth portion that is a portion between the slots adjacent to each other in the circumferential direction, and
   the tooth portion has a circumferential width that gradually decreases toward the inside in a radial direction.

3. The synchronous reluctance motor according to claim 2, wherein
   an average value of the circumferential width of the tooth portion is set to a value equal to or larger than a circumferential width of the slot.

4. The synchronous reluctance motor according to any one of claims 1 to 3, wherein
   each of the plurality of slots has a quadrilateral shape extending in the radial direction of the stator, as viewed in an axial direction of the rotor, and
   each of the slot coils includes a plurality of conductor portions disposed so as to extend in the axial direction of the rotor and arranged in line in the radial direction in each of the slots.

5. The synchronous reluctance motor according to any one of claims 1 to 4, wherein
   the rotor has flux barrier groups formed at an interval in the circumferential direction, the number of flux barrier groups corresponding to the number of poles, and each of the flux barrier groups consisting of a plurality of arc-shaped flux barriers that are arranged in a plurality of layers from an outer periphery of the rotor toward a center of the rotor and that are convex toward the center of the rotor.

FIG.1

FIG.2

FIG.3

FIG.4

CIRCUMFERENTIAL WIDTH X OF COIL ACCOMMODATING PORTION [mm]

FIG.5

FIG.6

FIG.7

FIG.8

FIG.9

FIG.10

FIG.11

3

Europäisches
Patentamt

European
Patent Office

Office européen
des brevets

# EUROPEAN SEARCH REPORT

Application Number

EP 17 17 5971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/170352 A1 (TECNOMATIC SPA [IT]) 12 November 2015 (2015-11-12) * abstract; figures 2-4 * ----- | 1-5 | INV. H02K1/24 H02K19/10 |
| X | US 2015/084448 A1 (NONAKA TSUYOSHI [JP]) 26 March 2015 (2015-03-26) * paragraphs [0094] - [0101]; figure 13 * ----- | 1-5 | ADD. H02K1/16 H02K3/12 |
| X | US 2014/084713 A1 (KURAHARA YOSHIMI [JP] ET AL) 27 March 2014 (2014-03-27) * paragraph [0048]; figures 2,4 * ----- | 1-4 | |
| X | EP 2 597 754 A1 (HITACHI AUTOMOTIVE SYSTEMS LTD [JP]) 29 May 2013 (2013-05-29) * paragraphs [0044], [0105]; figures 4,5 * ----- | 1-4 | |

TECHNICAL FIELDS
SEARCHED (IPC)

H02K

The present search report has been drawn up for all claims

| Place of search | Date of completion of the search | Examiner |
|---|---|---|
| The Hague | 3 October 2017 | Espinós Iglesias, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 5971

This annex lists the patent family members relating to the patent documents cited in  the above-mentioned European search report.
The members are as contained in the European Patent Office EDP file on
The European Patent Office is in no way liable for these particulars which are merely given for the purpose of information.

03-10-2017

| Patent document cited in search report | Publication date | Patent family member(s) | Publication date |
|---|---|---|---|
| WO 2015170352 A1 | 12-11-2015 | NONE | |
| US 2015084448 A1 | 26-03-2015 | CN 104364994 A | 18-02-2015 |
| | | JP 5831775 B2 | 09-12-2015 |
| | | JP WO2013183188 A1 | 28-01-2016 |
| | | US 2015084448 A1 | 26-03-2015 |
| | | WO 2013183188 A1 | 12-12-2013 |
| US 2014084713 A1 | 27-03-2014 | CN 103563220 A | 05-02-2014 |
| | | DE 112012002259 T5 | 20-03-2014 |
| | | JP 5624942 B2 | 12-11-2014 |
| | | JP 2012249398 A | 13-12-2012 |
| | | US 2014084713 A1 | 27-03-2014 |
| | | WO 2012165195 A1 | 06-12-2012 |
| EP 2597754 A1 | 29-05-2013 | BR 112013001411 A2 | 24-05-2016 |
| | | CN 103053097 A | 17-04-2013 |
| | | CN 105356641 A | 24-02-2016 |
| | | EP 2597754 A1 | 29-05-2013 |
| | | JP 5587693 B2 | 10-09-2014 |
| | | JP 2012029370 A | 09-02-2012 |
| | | KR 20130038269 A | 17-04-2013 |
| | | US 2013113330 A1 | 09-05-2013 |
| | | US 2016315516 A1 | 27-10-2016 |
| | | WO 2012011493 A1 | 26-01-2012 |

For more details about this annex : see Official Journal of the European Patent Office, No. 12/82

**REFERENCES CITED IN THE DESCRIPTION**

**Patent documents cited in the description**

- JP H11289730 B

- JP H11289730 A